# EUROPÄISCHE PATENTSCHRIFT

(11) **EP 2 214 003 B1**
(45) Veröffentlichungstag und Bekanntmachung des Hinweises auf die Patenterteilung: **05.07.2017**
(21) Anmeldenummer: 10151753.0
(22) Anmeldetag: 27.01.2010
(51) Int. Cl.: G01N 23/22

(54) **Gerät zur kombinierten Röntgenfluoreszenz- und Kristallstrukturanalyse**
Device for combined X-ray fluorescence analysis and diffractometry
Appareil pour la spectrométrie de fluorescence X et la diffractométrie de rayons X en combinaison

(30) Priorität: 31.01.2009 DE 102009006984
(43) Veröffentlichungstag der Anmeldung: 04.08.2010
(73) Patentinhaber: Bruker AXS GmbH, 76187 Karlsruhe (DE)
(72) Erfinder: Golenhofen, Rainer, 76275 Ettlingen (DE)
(74) Vertreter: Kohler Schmid Möbus Patentanwälte

(56) Entgegenhaltungen:
- WO-A1-97/13142
- JP-A- 2003 098 126
- JP-B2- 3 160 135
- US-A- 5 406 608
- D. SHU ET AL: "Design and test of a differential scanning stage system for an x-ray nanoprobe instrument", PROCEEDINGS SPIE, Bd. 5877, 18. August 2005 (2005-08-18), Seite 58770E, XP055264806, US ISSN: 0277-786X, DOI: 10.1117/12.617723 ISBN: 978-1-62841-832-3

## Beschreibung

### Hintergrund der Erfindung

Die Erfindung betrifft ein Röntgen-Spektrometer zur Durchführung sowohl einer Element- als auch einer Strukturanalyse einer polykristallinen Probe mit
a) einer polychromatischen Quelle zur Bereitstellung eines Strahls von auf die Probe einfallenden Röntgenstrahlen,
b) einer Halteeinrichtung zum Halten der Probe,
c) einem oder mehreren Fluoreszenzkanälen, welche in der Lage sind, Röntgenstrahlen einer speziellen Wellenlänge und Energie zu selektieren, und welche Detektoren zum Messen der selektierten Röntgenstrahlen aufweisen,
d) mindestens einem Diffraktometriekanal, welcher so konfiguriert ist, dass er mittels eines Monochromators eine Röntgenstrahlen-Wellenlänge der Quelle auf die Beugung der Röntgenstrahlen durch die Probe folgend selektiert, und weicher einen Detektor zum Messen der selektierten Röntgenstrahlen aufweist.

Ein solches Röntgen-Mehrkanal-Spektrometer ist bekannt aus der US 5,406,608A.

Zusätzlich zu den üblichen Fluoreszenzkanälen, mit weichen die jeweils für ein bestimmtes Material charakteristische emittierte Röntgenfluoreszenzstrahlung gemessen und daraus dann auf das Vorhandensein und gegebenenfalls die relative Menge bestimmter Elemente in der Messprobe geschlossen werden kann, ist bei dem in der US 5,406,608A beschriebenen Röntgen-Mehrkanal-Spektrometer außerdem auch noch ein Diffraktometriekanal zur Röntgen-Strukturanalyse vorgesehen, der mit einer Parallelstrahl-Optik betrieben wird. Um diesen Diffraktometriekanal für Messungen zu benutzen, muss bei dem bekannten Röntgen-Spektrometer zunächst eine erste Kollimator-Anordnung zwischen die Röntgen-Quelle und die zu vermessende Probe gesetzt oder geschoben werden. Der Diffraktometriekanal enthält zudem einen relativ zur Probe drehbaren Monochromator, welcher an seinem Eingang eine zweite Kollimator-Anordnung aufweist, durch welche die von der Probe unter einem bestimmten Winkel gebeugte Röntgenstrahlung auf einen Kristall gelangt, wo sie ebenfalls gebeugt wird und durch eine dritte Kollimator-Anordnung auf einen Detektor trifft.

Nachteilig sind bei dem bekannten Röntgen-Mehrkanal-Spektrometer zum einen der hohe bauliche Aufwand und die entsprechende Störanfälligkeit und hohen Fertigungskosten. Die für die Beugungsanalyse verwendete Parallelstrahl-Optik benötigt zudem viel Platz, da die Kollimatoren eine erhebliche Tiefe aufweisen. Für die erste Kollimator-Anordnung muss ein entsprechend großer Abstand zwischen Quelle und Probe freibleiben, der auch bei den Fluoreszenzmessungen, bei welchen die erste Kollimator-Anordnung aus dem Bereich zwischen Quelle und Probe entfernt wird, bestehen bleibt und zu einer permanenten starken Verringerung der Strahlintensität führt.

Um einen Beugungsscan zu fahren, wird bei dem bekannten Röntgen-Mehrkanal-Spektrometer der gesamte Monochromator in einer bogenförmigen Bewegung, üblicherweise Kreisbewegung um den Probenmittelpunkt verfahren. Die hierfür erforderliche Mechanik ist ebenfalls sehr aufwendig sowie platz-, wartungs- und kostenintensiv. JP3160135B2 offenbart ein Röntgen-Spektrometer zur Untersuchung von Zement und insbesondere von Freikalk CaO in Zement. JP3160135B2 offenbart insbesondere ein Röntgen-Spektrometer zur Durchführung sowohl einer Element- als auch einer Strukturanalyse einer polykristallinen Probe mit
a) einer polychromatischen Quelle zur Bereitstellung eines Strahls von auf die Probe einfallenden Röntgenstrahlen,
b) einer Halteeinrichtung zum Halten der Probe,
c) einem oder mehreren Fluoreszenzkanälen, welche in der Lage sind, Röntgenstrahlen einer speziellen Wellenlänge und Energie zu selektieren, und welche Detektoren zum Messen der selektierten Röntgenstrahlen aufweisen,
d) mindestens einem Diffraktometriekanal, welcher so konfiguriert ist, dass er mittels eines Monochromators eine Röntgenstrahlen-Wellenlänge der Quelle auf die Beugung der Röntgenstrahlen durch die Probe folgend selektiert, und welcher einen Detektor zum Messen der selektierten Röntgenstrahlen aufweist,
wobei zwischen Quelle und Probe eine quer zur Richtung des die Quelle verlassenden Strahls bewegbare Kollimator- oder Lochblende vorgesehen ist, und der Monochromator des Diffraktometriekanals bezüglich Quelle und Probe feststehend angeordnet ist, wobei die von der bewegbaren Kollimator- oder Lochblende und der Probenposition abhängige Position des bestrahlten Messflecks zusammen mit der Position von Monochromator und Detektor den charakteristischen Beugungswinkel 2θ einer vorgegebenen Kristallstruktur der polykristallinen Probe bei der durch den Monochromator selektierten Wellenlänge der Quelle definiert.
In JP3160135B2 wird die gebeugte Strahlung bei nur einem Beugungswinkel 2θ,
der einem Reflex des untersuchten Materials entspricht, gemessen wie etwa auch in JP2003098126.
Daneben gibt es sowohl für diese spezielle Anwendung der Untersuchung von Freikalk CaO in Zement als auch für andere Anwendungen aufwendigere kombinierte Fluoreszenzspektrometer/Diffraktometer, die bei einer Vielzahl von Beugungswinkeln 2θ messen, wobei die Monochromator/Detektoranordnung des Diffraktometriekanals bezüglich Quelle und Probe verschoben wird, siehe z.B. WO9713142 oder US5406608 für die Untersuchung von Freikalk CaO in Zement

### Aufgabe der Erfindung

Aufgabe der Erfindung ist es demgegenüber, ein gattungsgemäßes Röntgen-Mehrkanal-Spektrometer der eingangs genannten Art mit technisch möglichst einfachen Mitteln so zu modifizieren, dass eine zuverlässige Elementanalyse und eine kostengünstige Röntgenbeugung im gleichen Gerät ermöglicht wird, wobei die im Stand der Technik erforderlichen mindestens drei Kollimator-Anordnungen für den Diffraktometriekanal eingespart werden sollen und für einen Beugungsscan keine aufwändige Bewegungsmechanik des Monochromator im Diffraktometriekanal erforderlich ist.

### Kurze Beschreibung der Erfindung

Diese Aufgabe wird erfindungsgemäß auf überraschend einfache, aber wirkungsvolle Weise dadurch gelöst, dass zwischen Quelle und Probe eine quer zur Richtung des die Quelle verlassenden Strahls bewegbare Einzelspalteinrichtung vorgesehen ist, und dass der Monochromator des Diffraktometriekanals bezüglich Quelle und Probe feststehend angeordnet ist und einen Eingangseinzeispalt aufweist, der zusammen mit der bewegbaren Einzelspalteinrichtung und der Probenposition den charakteristischen Beugungswinkel 2θ einer vorgegebenen Kristallstruktur der polykristallinen Probe bei der durch den Monochromator selektierten Wellenlänge der Quelle definiert.

Die simple und kostengünstige Einzelspalteinrichtung der vorliegenden Erfindung, welche die erheblich aufwändigere erste Kollimator-Anordnung beim Röntgen-Mehrkanal-Spektrometer nach dem Stand der Technik ersetzt, benötigt nur sehr wenig Platz, da der Spalt in der Praxis nur eine Tiefe von ca. 2mm aufweist.

Außerdem lässt sich mit dem kompakten Bragg-Brentano-Strahiengang beim erfindungsgemäßen Röntgen-Mehrkanal-Spektrometer im Gegensatz zum Parallelstrahlengang beim Stand der Technik ein sehr viel höherer 2θ-Beugungswinkel (über 146°) erreichen. Dadurch lässt sich beispielsweise in dem besonders wichtigen Anwendungsfall für Freikalk (CaO) der Beugungswinkel mit der im Vergleich zur Rhodium-Lβ-Linie ca. 7-fach intensiveren Rhodium-Lα-Linie messen. Dies ist z.B. aus JP3160135B2 bekannt.

Gegenüber dem aufwändigen bogenförmigen Verschwenken des gesamten Monochromators sowie dem Einbringen der ersten Kollimator-Anordnung in den Raumbereich zwischen Quelle und Probe für die Aufnahme eines Beugungsscans bei einem Röntgen-Spektrometer der in der US 5,406,608A beschriebenen Art ist das simple Einbringen der Einzelspalteinrichtung zwischen Quelle und Probe bei einem erfindungsgemäßen Röntgen-Mehrkanal-Spektrometer sehr einfach zu bewerkstelligen und erfordert nur minimale mechanische Einrichtungen. Die Bewegung des Monochromators im Diffraktometriekanal entfällt vollständig.

### Bevorzugte Ausführungsformen der Erfindung

Bei einer besonders bevorzugten Ausführungsform des erfindungsgemäßen Röntgen-Spektrometers ist die bewegbare Einzelspalteinrichtung in mehrere Positionen, vorzugsweise kontinuierlich, insbesondere linear verschiebbar. Die Einzelspalteinrichtung kann bei ganz einfachen Spektrometern aber auch herausnehmbar oder zumindest vom Strahlausgang der Röntgen-Quelle genügend weit wegschwenkbar konstruiert sein, um einen Messmodus mit einem der Fluoreszenzkanäle zu ermöglichen, wie im Prinzip aus JP3160135B2 bekannt.

In einfachen und besonders kostengünstigen Ausführungsformen des erfindungsgemäßen Röntgen-Spektrometers ist die bewegbare Einzelspalteinrichtung aus zwei Schneidenblenden aufgebaut.

Besonders bevorzugt sind auch Ausführungsformen der Erfindung, bei denen die Spaltöffnungen von Einzelspalteinrichtung und Eingangseinzelspalt an die Halbwertsbreite der gemessenen selektierten Röntgenstrahlung angepasst sind. Dies ermöglicht eine Optimierung der Anordnung auf die Eigenschaften der Kristallite in der Messprobe.

Für viele praktische Anwendungen des erfindungsgemäßen Röntgen-Mehrkanal-Spektrometers wird die Röntgen-Quelle eine Rhodium-Anode aufweisen, da die Rhodium-K- und Rhodium-L-Linien einen großen Elementbereich anregen und die üblichen Röntgenröhren-Fenster eine 70%-Durchlassintensität für die Strahlung der Rhadium-Lα,β-Linien aufweisen.

In vielen ganz besonders wichtigen Anwendungen wird die vorgegebene Kristallstruktur der polykristallinen Probe diejenige von CaO (=Freikalk) sein. Gerade für dieses Analysegebiet wird derzeit weltweit ein erheblicher Teil der gattungsgemäßen Röntgen-Mehrkanal-Spektrometer eingesetzt.

Gerade für derartige Freikalk-Anwendungen sind Ausführungsformen des erfindungsgemäßen Röntgen-Mehrkanal-Spektrometers günstig, bei denen der charakteristische Beugungswinkel 2θ größer als 140° ist, vorzugsweise 2θ ≈ 146°, wie aus JP3160135B2 bekannt. Bei Ausführungsform der Erfindung, bei denen die Einzelspalteinrichtung, die Probe und der Eingangseinzelspalt des Monochromators auf einem Rowland-Kreis angeordnet sind, kann mit einem Strahlen-Öffnungswinkel von 10° gearbeitet werden ohne die Auflösung wesentlich zu beeinträchtigen. Der Kollimator beim Stand der Technik muss hingegen immer eine maximale Divergenz von ca. 1° aufweisen. Daher kann bei einem erfindungsgemäßen Röntgen-Mehrkanal-Spektrometer auch bei stark divergierender Röntgenstrahlung und relativ großen Öffnungswinkel des Monochromators die Bragg-Bedingung für 2θ erfüllt werden, was einen erheblichen Gewinn an nutzbarer Strahlungsintensität ermöglicht.

Eine hohe Intensitätsausbeute wird auch bei vorteilhaften Ausführungsformen der Erfindung erzielt, bei denen der Monochromator des Diffraktometriekanals mit einem gekrümmten Fokussierkristall ausgestattet ist.

In bevorzugten Weiterbildungen dieser Ausführungsformen weist der Fokussierkristall eine logarithmische Krümmung auf. Diese Formauswahl bietet einen guten Kompromiss zwischen der besonders hohen Auflösung eines (sehr kostspieligen) Johansson-Kristalls (exakte Fokussierung) und dem in der Herstellung wesentlich preiswerteren Johann-Kristalls.

In der Praxis wird bei den meisten erfindungsgemäßen Röntgen-Mehrkanal-Spektrometern die selektierte Wellenlänge des Monochromators im Diffraktometriekanal gleich einer charakteristischen Wellenlänge der Quelle sein. Möglich ist aber auch die Verwendung von Röntgen-Bremsstrahlung.

Schließlich kann als fokussierender Monochromator bei einem erfindungsgemäßen Röntgen-Mehrkanal-Spektrometer im Diffraktometriekanal auch ein nahezu baugleicher Monochromator wie bei den Fluoreszenzkanälen verwendet werden. Dies führt zu beträchtlichen Kosteneinsparungen bei der Herstellung und auch im Betrieb des Spektrometers, weil erheblich weniger voneinander unterschiedliche Bauteile eingesetzt und gewartet werden müssen als z.B. beim Stand der Technik. Dies ist aus JP3160135B2 und JP2003098126 bekannt.

In den Rahmen der vorliegenden Erfindung fällt auch ein Verfahren zum Betrieb eines erfindungsgemäßen Röntgen-Spektrometers, weiches sich dadurch auszeichnet, dass während der Messung der selektierten Röntgenstrahlung die Einzelspalteinrichtung über mehrere Messpositionen bewegt wird (=Scan). Einen derartigen Scan kann man auch dafür einsetzen, um den optimalen Beugungswinkel 2θ zu bestimmen und die Apparatur dementsprechend zu justieren. Beispielsweise kann auch ein Integral der gemessenen Intensität unter einer gewünschten Beugungs-Linie aufgenommen werden.

Weitere Vorteile der Erfindung ergeben sich aus der Beschreibung und der Zeichnung. Ebenso können die vorstehend genannten und die weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Zeichnung und detaillierte Beschreibung der Erfindung

Es zeigen:
- Fig. 1: eine schematische Schnittdarstellung einer Ausführungsform des erfindungsgemäßen Röntgen-Mehrkanal-Spektrometers mit bewegbarer Einzelspalteinrichtung zwischen Quelle und Probe ohne Kollimator-Anordnungen;
- Fig. 2: ein Röntgen-Mehrkanal-Spektrometer nach dem Stand der Technik mit Kollimator-Anordnungen im Diffraktometriekanal;
- Fig. 3: eine schematische Detaildarstellung eines erfindungsgemäßen Diffraktometers, bei welchem die Einzelspalteinrichtung, die Probe und der Eingangseinzelspalt des Monochromators auf einem Rowland-Kreis angeordnet sind; und
- Fig. 4: eine schematische Schnittdarstellung einer Röntgen-Quelle mit vorgelagerter, aus zwei Schneidenblenden aufgebauter Einzelspalteinrichtung in einem erfindungsgemäßen Röntgen-Mehrkanal-Spektrometer.

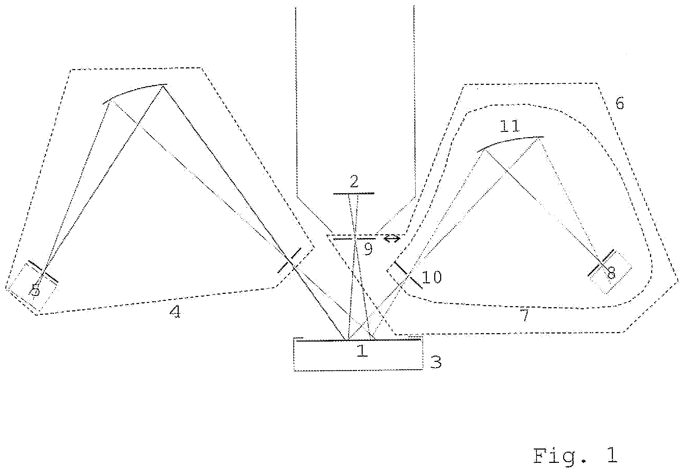

Die sehr schematisch gehaltene Schnittdarstellung von Fig. 1 zeigt eine Ausführungsform eines erfindungsgemäßen Röntgen-Spektrometers zur Durchführung sowohl einer Element- als auch einer Strukturanalyse einer polykristallinen **Probe 1**.

Eine polychromatischen **Quelle 2**, die vorzugsweise eine Rhodium-Anode aufweist, dient zur Bereitstellung eines Strahls von auf die Probe 1 einfallenden Röntgenstrahlen. Die Probe 1 wird von einer **Halteeinrichtung 3** getragen.

In der Zeichnung ist links von der Quelle 2 lediglich ein **Fluoreszenzkanal 4** von mehreren möglichen dargestellt, welche in der Lage sind, Röntgenstrahlen einer speziellen Wellenlänge und Energie zu selektieren, und jeweils einen **Detektor 5** zum Messen der selektierten Röntgenstrahlen aufweisen.

Rechts von der Quelle ist ein **Diffraktometriekanal 6** von ebenfalls mehreren möglichen gezeigt, welcher so konfiguriert ist, dass er mittels eines **Monochromators 7** eine Röntgenstrahlen-Wellenlänge der Quelle 2 im Anschluss an die Beugung der Röntgenstrahlen durch die Probe 1 selektiert. Der Diffraktometriekanal 6 weist ebenfalls einen **Detektor 8** zum Messen der selektierten Röntgenstrahlen auf.

Eine Besonderheit des erfindungsgemäßen Röntgen-Mehrkanal-Spektrometers besteht darin, dass zwischen Quelle 2 und Probe 1 eine quer zur Richtung des die Quelle 2 verlassenden Strahls bewegbare **Einzelspalteinrichtung 9** vorgesehen ist, die vorzugsweise kontinuierlich, insbesondere linear verschiebbar ist, wie durch den Doppelpfeil in Fig.1 angedeutet wird.

Der Monochromator 7 des Diffraktometriekanals 6 ist bezüglich Quelle 2 und Probe 1 feststehend angeordnet und weist einen **Eingangseinzelspalt 10** auf, der zusammen mit der bewegbaren Einzelspalteinrichtung 9 und der Probenposition den charakteristischen Beugungswinkel 2θ einer vorgegebenen Kristallstruktur der polykristallinen Probe 1 bei der durch den Monochromator 7 selektierten Wellenlänge der Quelle 2 definiert. Die selektierte Wellenlänge des Monochromators 7 kann gleich einer charakteristischen Wellenlänge der Quelle 2 gewählt werden.

Wie in Fig. 1 angedeutet, besitzt der Monochromator 7 des Diffraktometriekanals 6 einen gekrümmten **Fokussierkristall 11** mit einer vorzugsweise logarithmischen Krümmung.

Ein besonderer Vorteil des erfindungsgemäßen Röntgen-Mehrkanal-Spektrometers liegt darin, dass die Fluoreszenzkanäle 4 aus den gleichen Bauteilen aufgebaut sein können wie der Monochromator 7 des Diffraktometriekanals 6.

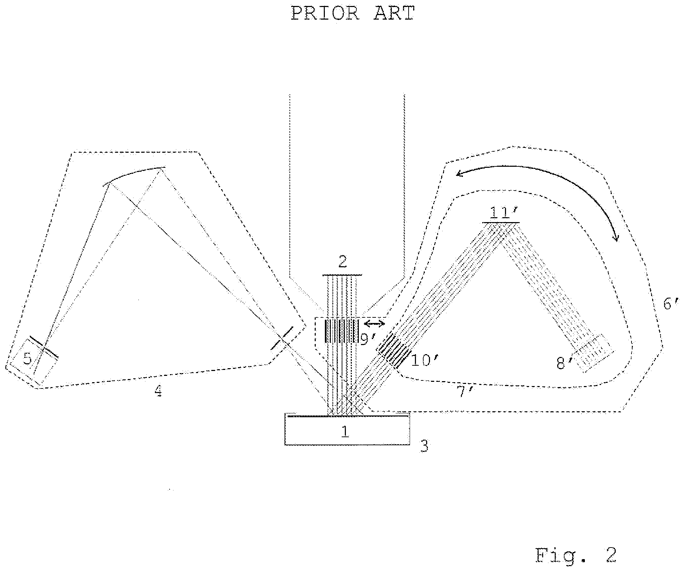

Fig. 2 stellt schematisch ein Röntgen-Mehrkanal-Spektrometer nach dem oben diskutierten Stand der Technik dar. Während die Quelle 2 und die Fluoreszenzkanäle 4 ähnlich aufgebaut sind wie beim erfindungsgemäßen Spektrometer gemäß Fig. 1, unterscheidet sich der **Diffraktometriekanal 6'** des herkömmlichen Spektrometers dadurch, dass hier anstelle von einfachen Einzelspalten 9, 10 erheblich komplizierter aufgebaute und voluminöse Kollimator-Anordnungen eingesetzt werden, nämlich eine in den Bereich zwischen Quelle 2 und Probe 1 einbringbare **erste Kollimator**-**Anordnung 9'**, am Eingang des **Monochromators 7'** eine **zweite Kollimator-Anordnung 10'** und eine **dritte Kollimator**-**Anordnung 8'** mit Detektor. Anstelle eines gekrümmten Fokussierkristalls 11 wird im Monochromator 7' ein **Röntgenspiegel 11**' verwendet.

Zudem muss der Monochromator 7' bei der Apparatur nach den Stand der Technik für die Aufnahme eines Beugungsscan im Diffraktometriekanal 6' auf einem Bogen verfahrbar sein, was in Fig. 2 mit einem gekrümmten Doppelpfeil angedeutet ist. Bei der erfindungsgemäßen Apparatur gemäß Fig. 1 wird während der Messung der selektierten Röntgenstrahlung lediglich die Einzelspalteinrichtung 9 über mehrere Messpositionen bewegt, wohingegen der Monochromator 7 fest stehenbleibt.

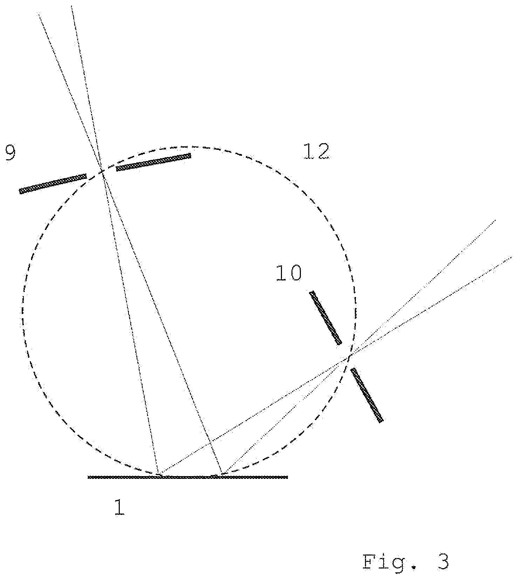

Fig. 3 zeigt schematisch in größerem Detail eine Ausführungsform des erfindungsgemäßen Röntgen-Mehrkanal-Spektrometers, bei welcher die Einzelspalteinrichtung 9, die Probe 1 und der Eingangseinzelspalt 10 des Monochromators auf einem **Rowland-Kreis 12** angeordnet sind.

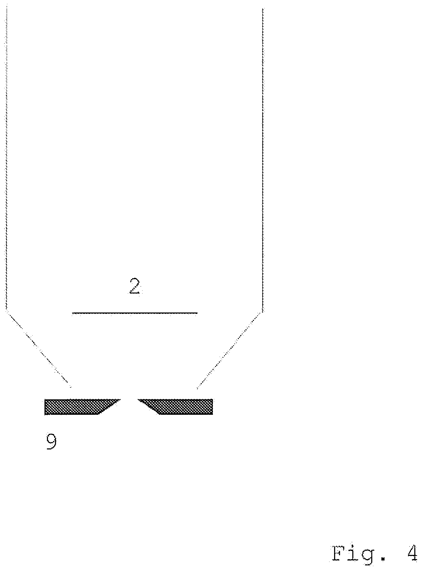

In Fig. 4 schließlich ist eine am Ausgang der Röntgen-Quelle 2 angeordnete, bewegbare Einzelspalteinrichtung 9 gezeigt, die aus zwei Schneidenblenden aufgebaut ist.

### Bezugszeichenliste

- 1: Probe
- 2: Quelle
- 3: Halteeinrichtung
- 4: Fluoreszenzkanal
- 5: Detektor
- 6: Diffraktometriekanal
- 6': Diffraktometriekanal beim Stand der Technik
- 7: Monochromator
- 7': Monochromator beim Stand der Technik
- 8: Detektor mit Einzelspalt
- 8': Detektor mit Kollimator beim Stand der Technik
- 9: Einzelspalteinrichtung
- 9': erste Kollimator-Anordnung beim Stand der Technik
- 10: Eingangseinzelspalt
- 10': zweite Kollimator-Anordnung beim Stand der Technik
- 11: gekrümmter Fokussierkristall
- 11': Röntgenspiegel
- 12: Rowland-Kreis

## Patentansprüche

1. Röntgen-Spektrometer zur Durchführung sowohl einer Element- als auch einer Strukturanalyse einer polykristallinen Probe (1) mit
a) einer polychromatischen Quelle (2) zur Bereitstellung eines Strahls von auf die Probe (1) einfallenden Röntgenstrahlen,
b) einer Halteeinrichtung (3) zum Halten der Probe (1),
c) einem oder mehreren Fluoreszenzkanälen (4), welche in der Lage sind, Röntgenstrahlen einer speziellen Wellenlänge und Energie zu selektieren, und welche Detektoren (5) zum Messen der selektierten Röntgenstrahlen aufweisen,
d) mindestens einem Diffraktometriekanal (6), welcher so konfiguriert ist, dass er mittels eines Monochromators (7) eine Röntgenstrahlen-Wellenlänge der Quelle (2) auf die Beugung der Röntgenstrahlen durch die Probe (1) folgend selektiert, und welcher einen Detektor (8) zum Messen der selektierten Röntgenstrahlen aufweist, wobei zwischen Quelle (2) und Probe (1) eine quer zur Richtung des die Quelle (2) verlassenden Strahls bewegbare Einzelspalteinrichtung (9) vorgesehen ist, und der Monochromator (7) des Diffraktometriekanals bezüglich Quelle (2) und Probe (1) feststehend angeordnet ist und einen Eingangseinzelspalt (10) aufweist, der zusammen mit der bewegbaren Einzelspalteinrichtung (9) und der Probenposition den charakteristischen Beugungswinkel 2θ einer vorgegebenen Kristallstruktur der polykristallinen Probe (1) bei der durch den Monochromator (7) selektierten Wellenlänge der Quelle (2) definiert.

2. Röntgen-Spektrometer nach Anspruch 1, **dadurch gekennzeichnet, dass** die bewegbare Einzelspalteinrichtung (9) in mehrere Positionen, vorzugsweise kontinuierlich, insbesondere linear verschiebbar ist.

3. Röntgen-Spektrometer nach einem der vorhergehenden Ansprüche,
**dadurch gekennzeichnet, dass** die bewegbare Einzelspalteinrichtung (9) aus zwei Schneidenblenden aufgebaut ist.

4. Röntgen-Spektrometer nach einem der vorhergehenden Ansprüche,
**dadurch gekennzeichnet, dass** die Spaltöffnungen von Einzelspalteinrichtung (9) und Eingangseinzelspalt (10) an die Halbwertsbreite der gemessenen selektierten Röntgenstrahlung angepasst sind.

5. Röntgen-Spektrometer nach einem der vorhergehenden Ansprüche,
**dadurch gekennzeichnet, dass** die Quelle (2) eine Rhodium-Anode aufweist.

6. Röntgen-Spektrometer nach einem der vorhergehenden Ansprüche,
**dadurch gekennzeichnet, dass** die vorgegebene Kristallstruktur der polykristallinen Probe (1) diejenige von CaO (=Freikalk) ist.

7. Röntgen-Spektrometer nach einem der vorhergehenden Ansprüche,
**dadurch gekennzeichnet, dass** für den charakteristischen Beugungswinkel gilt: 2θ > 140°, vorzugsweise 2θ ≈ 146°.

8. Röntgen-Spektrometer nach einem der vorhergehenden Ansprüche,
**dadurch gekennzeichnet, dass** die Einzelspalteinrichtung (9), die Probe (1) und der Eingangseinzelspalt (10) des Monochromators (7) auf einem Rowland-Kreis (12) angeordnet sind.

9. Röntgen-Spektrometer nach einem der vorhergehenden Ansprüche,
**dadurch gekennzeichnet, dass** der Monochromator (7) einen gekrümmten Fokussierkristall (11) aufweist.

10. Röntgen-Spektrometer nach Anspruch 9, **dadurch gekennzeichnet, dass** der Fokussierkristall (11) eine logarithmische Krümmung aufweist.

11. Röntgen-Spektrometer nach einem der vorhergehenden Ansprüche,
**dadurch gekennzeichnet, dass** die selektierte Wellenlänge des Monochromators (7) gleich der charakteristischen Wellenlänge der Quelle (2) ist.

12. Röntgen-Spektrometer nach einem der vorhergehenden Ansprüche,
**dadurch gekennzeichnet, dass** die Fluoreszenzkanäle (4) aus den gleichen Bauteilen aufgebaut sind wie der Monochromator (7) des Diffraktometriekanals (6).

13. Verfahren zum Betrieb eines Röntgen-Spektrometers nach einem der vorhergehenden Ansprüche, **dadurch gekennzeichnet, dass** während der Messung der selektierten Röntgenstrahlung die Einzelspalteinrichtung (9) über mehrere Messpositionen bewegt wird (=Scan).

## Claims

1. An X-ray spectrometer for carrying out both an element analysis and a structural analysis of a polycrystalline sample (1), comprising
a) a polychromatic source (2) for providing a beam of X-rays that are incident on the sample (1),
b) a holding device (3) for holding the sample (1),
c) one or more fluorescence channels (4) which can select X-ray beams of a particular wavelength and energy and which have detectors (5) for measuring the selected X-ray beams;
d) at least one diffractometry channel (6) which is configured to select, by means of a monochromator (7), an X-ray beam wavelength of the source (2) subsequent to diffraction of the X-ray beams by the sample (1) and having a detector (8) for measuring the selected X-ray beams,
wherein
a single slit device (9) is provided between the source (2) and the sample (1) which can be moved transversely relative to a direction of the beam exiting the source (2), and the monochromator (7) of the diffractometry channel is stationarily disposed with respect to the source (2) and the sample (1) and has an entry single slit (10) which defines, together with the movable single slit device (9) and the sample position, a characteristic diffraction angle 2Θ of a predetermined crystal structure of the polycrystalline sample (1) at a wavelength of the source (2) selected by the monochromator (7).

2. The X-ray spectrometer according to claim 1, **characterized in that** the movable single slit device (9) can be moved to several positions, preferably in a continuous fashion, in particular in a linear fashion.

3. The X-ray spectrometer according to any one of the preceding claims, **characterized in that** the movable single slit device (9) is formed from two collimator blades.

4. The X-ray spectrometer according to any one of the preceding claims, **characterized in that** the slit openings of the single slit device (9) and the entry single slit (10) are adjusted to a half width of the measured selected X-ray radiation.

5. The X-ray spectrometer according to any one of the preceding claims, **characterized in that** the source (2) has a Rhodium anode.

6. The X-ray spectrometer according to any one of the preceding claims, **characterized in that** the predetermined crystal structure of the polycrystalline sample (1) is that of CaO (free lime).

7. The X-ray spectrometer according to any one of the preceding claims, **characterized in that** the characteristic diffraction angle is given by 2Θ>140°, preferably 2Θ≈146°.

8. The X-ray spectrometer according to any one of the preceding claims, **characterized in that** the single slit device (9), the sample (1) and the entry single slit (10) of the monochromator (7) are disposed on a Rowland circle (12).

9. The X-ray spectrometer according to any one of the preceding claims, **characterized in that** the monochromator (7) has a curved focusing crystal (11).

10. The X-ray spectrometer according to claim 9, **characterized in that** the focusing crystal (11) has a logarithmic curvature.

11. The X-ray spectrometer according to any one of the preceding claims, **characterized in that** the selected wavelength of the monochromator (7) is equal to the characteristic wavelength of the source (2).

12. The X-ray spectrometer according to any one of the preceding claims, **characterized in that** the fluorescence channels (4) are formed from the same components as the monochromator (7) of the diffractometry channel (6).

13. A method for operating the X-ray spectrometer according to any one of the preceding claims, **characterized in that** during measurement of the selected X-ray beams, the single slit device (9) is moved over several measuring positions (=scan).

## Revendications

1. Spectromètre à rayons X permettant de réaliser aussi bien une analyse élémentaire qu'une analyse structurale d'un échantillon polycristallin (1), comprenant
a) une source polychromatique (2) pour fournir un faisceau de rayons X incidents sur l'échantillon (1),
b) un dispositif de maintien (3) pour maintenir l'échantillon (1),
c) un ou plusieurs canaux de fluorescence (4) qui sont en mesure de sélectionner des rayons X d'une longueur d'onde et d'une énergie spécifiques et qui présentent des détecteurs (5) pour mesurer les rayons X sélectionnés,
d) au moins un canal de diffractométrie (6), lequel est configuré de façon à sélectionner, au moyen d'un monochromateur (7), une longueur d'onde de rayons X de la source (2) suite à la diffraction des rayons X par l'échantillon (1), et lequel présente un détecteur (8) pour mesurer les rayons X sélectionnés,
dans lequel spectromètre un dispositif à fente simple (9), mobile transversalement à la direction du faisceau qui quitte la source (2), est prévu entre la source (2) et l'échantillon (1), et le monochromateur (7) du canal de diffractométrie est disposé de manière fixe par rapport à la source (2) et à l'échantillon (1) et présente une fente simple d'entrée (10) qui définit, conjointement avec le dispositif à fente simple mobile (9) et la position de l'échantillon, l'angle de diffraction caractéristique 2θ d'une structure cristalline prédéfinie de l'échantillon polycristallin (1) à la longueur d'onde de la source (2) sélectionnée par le monochromateur (7).

2. Spectromètre à rayons X selon la revendication 1, **caractérisé en ce que** le dispositif à fente simple mobile (9) est déplaçable de façon continue, en particulier linéairement, dans plusieurs positions.

3. Spectromètre à rayons X selon l'une des revendications précédentes, **caractérisé en ce que** le dispositif à fente simple mobile (9) est constitué de deux diaphragmes à lame.

4. Spectromètre à rayons X selon l'une des revendications précédentes, **caractérisé en ce que** les ouvertures de fente du dispositif à fente simple (9) et de la fente simple d'entrée (10) sont adaptées à la largeur à mi-hauteur du rayonnement X sélectionné mesuré.

5. Spectromètre à rayons X selon l'une des revendications précédentes, **caractérisé en ce que** la source (2) présente une anode en rhodium.

6. Spectromètre à rayons X selon l'une des revendications précédentes, **caractérisé en ce que** la structure cristalline prédéfinie de l'échantillon polycristallin (1) est celle de CaO (= oxyde de calcium).

7. Spectromètre à rayons X selon l'une des revendications précédentes, **caractérisé en ce que** l'angle de diffraction caractéristique est tel que : 2θ > 140°, de préférence 2θ ≈ 146°.

8. Spectromètre à rayons X selon l'une des revendications précédentes, **caractérisé en ce que** le dispositif à fente simple (9), l'échantillon (1) et la fente simple d'entrée (10) du monochromateur (7) sont disposés sur un cercle de Rowland (12).

9. Spectromètre à rayons X selon l'une des revendications précédentes, **caractérisé en ce que** le monochromateur (7) présente un cristal de focalisation courbe (11).

10. Spectromètre à rayons X selon la revendication 9, **caractérisé en ce que** le cristal de focalisation (11) présente une courbure logarithmique.

11. Spectromètre à rayons X selon l'une des revendications précédentes, **caractérisé en ce que** la longueur d'onde sélectionnée du monochromateur (7) est égale à la longueur d'onde caractéristique de la source (2).

12. Spectromètre à rayons X selon l'une des revendications précédentes, **caractérisé en ce que** les canaux de fluorescence (4) sont constitués des mêmes éléments que le monochromateur (7) du canal de diffractométrie (6).

13. Procédé de fonctionnement d'un spectromètre à rayons X selon l'une des revendications précédentes, **caractérisé en ce que** pendant la mesure du rayonnement X sélectionné, le dispositif à fente simple (9) est déplacé sur plusieurs positions de mesure (= balayage).
